# EUROPÄISCHE PATENTANMELDUNG

(11) **EP 1 028 579 A2**
(43) Veröffentlichungstag der Anmeldung: **16.08.2000**
(21) Anmeldenummer: 99440374.9
(22) Anmeldetag: 24.12.1999
(51) Int. Cl.: H04M 3/487

(54) **Verfahren zum Aufgeben und Abfragen einer Anzeige**

(30) Priorität: 12.02.1999 DE 19905825
(71) Anmelder: ALCATEL, 75008 Paris (FR)
(72) Erfinder: Hägebarth, Frank, 74366 Kirchheim (DE)
(74) Vertreter: Wörz, Volker Alfred

(57) **Zusammenfassung**

Die Erfindung betrifft ein Verfahren und ein System zum Aufgeben und Abfragen einer Anzeige. Um Anzeigen ohne große Verzögerung aufgeben und abrufen zu können und um einen möglichst großen interessierten Personenkreis mit einer aufgegebenen Anzeige erreichen zu können, wird ein Verfahren vorgeschlagen, das durch die nachfolgenden Schritte gekennzeichnet ist:
- Anwahl einer vorgegebenen Rufnummer eines Diensterechners in einem Telekommuniations (TK)-Netzwerk (1) und Aufbau einer Verbindung zu dem Diensterechner (2);
- Auswahl einer gewünschten Rubrik der Anzeige (4); und
- Eingabe eines Anzeigentexts (6) in einen oder Ausgabe eines Anzeigentexts (12) aus einem der ausgewählten Rubrik zugeordneten Anzeigenspeicher (10).

## Beschreibung

Die vorliegende Erfindung betrifft ein Verfahren zum Aufgeben und Abfragen einer Anzeige. Die Erfindung betrifft außerdem ein System zum Aufgeben und Abfragen einer Anzeige.

Aus dem Stand der Technik ist es bekannt, Anzeigen in gedruckter Form in Printmedien oder als elektronische Anzeigen in Computernetzwerken, insbesondere im weltweit erreichbaren Internet, aufzugeben. Eine Person, die eine Anzeige aufgibt, versucht über diese Anzeige einen interessierten Personenkreis zu erreichen und diesem Personenkreis eine Ware oder Dienstleistung anzubieten. Um eine Anzeige abzufragen, müssen in der Regel die entsprechenden Printmedien gekauft oder die entsprechenden Adressen in einem Computernetzwerk aufgesucht werden. Eine Person, die eine Anzeige abfragt, versucht auf diesem Wege Angebote über Waren oder Dienstleistungen zu erhalten.

Die herkömmliche Veröffentlichung von Anzeigen in den Printmedien hat den Nachteil, daß sie in der Regel sehr lange Reaktionszeiten aufweist. Die Person, die eine Anzeige aufgeben möchte, entwirft den Anzeigentext und schickt ihn per Post, als Telefax oder als elektronische Post (e-mail) an den Herausgeber der Printmedien. Dort wird der Anzeigentext in eine druckreife Form gebracht. Der Anzeigentext wird zusammen mit Informationen zur Identifikation der Person, die die Anzeige aufgegeben hat, in der folgenden Ausgabe der Printmedien veröffentlicht. Die Informationen zur Identifikation umfassen bspw. eine Chiffrenummer, die Telefonnummer oder e-mail-Adresse oder den Namen und die Anschrift derjenigen Person, die die Anzeige aufgegeben hat. Von dem Entwurf des Anzeigentexts bis zu der Veröffentlichung der Anzeige vergehen mehrere Tage. Eine rasche Reaktion auf Änderungen der Anzeige ist bei einer so großen Verzögerung der Veröffentlichung der Anzeigen nicht möglich.

Außerdem decken die Printmedien in der Regel einen relativ großen räumlichen Bereich ab, um die für eine Rentabilität des Printmediums notwendige hohe Auflagenzahl des Printmediums zu erreichen. Da die Personen, die die Anzeigen abfragen, in der Regel Anzeigen aus ihrer näheren Umgebung suchen, ist die Auswahl von geeigneten Anzeigen aus der Vielzahl der überregionalen Anzeigen oft sehr aufwendig und mühsam.

Die insbesondere in jüngerer Zeit verstärkt auftretende Veröffentlichung von Anzeigen im Internet weist deutlich kürzere Reaktionszeiten auf als die Veröffentlichung von Anzeigen in den Printmedien. Allerdings arbeiten gerade die Anzeigensysteme im Internet überregional, in der Regel sogar national oder international. Im Internet gibt es eine derart große Anzahl von Anzeigensystemen, daß einer Person, die eine Anzeige abrufen möchte, oft der Überblick fehlt. Außerdem schwankt die Anzahl und die Qualität der Anzeigen so stark, daß sie für eine Person, die eine Anzeige zu einem bestimmten Thema und für einen bestimmten räumlichen Bereich abrufen möchte, kaum attraktiv sind. Zudem kann ein Großteil des interessierten Personenkreises über das Internet auf absehbare Zeit noch nicht erreicht werden.

Die Aufgabe der vorliegenden Erfindung besteht deshalb darin, ein Verfahren der eingangs genannten Art dahingehend auszugestalten und weiterzubilden, daß Anzeigen ohne große Verzögerung aufgegeben und abgerufen werden können und daß ein möglichst großer interessierter Personenkreis erreicht werden kann.

Zur Lösung dieser Aufgabe schlägt die Erfindung ausgehend von dem Verfahren der eingangs genannten Art ein Verfahren vor, daß gekennzeichnet ist durch die nachfolgenden Schritte:
- Anwahl einer vorgegebenen Rufnummer eines Diensterechners in einem Telekommuniations (TK)-Netzwerk und Aufbau einer Verbindung zu dem Diensterechner;
- Auswahl einer gewünschten Rubrik der Anzeige; und
- Eingabe eines Anzeigentexts in oder Ausgabe eines Anzeigentexts aus einem der ausgewählten Rubrik zugeordneten Anzeigenspeicher.

Bei dem erfindungsgemäßen Verfahren liegen die Anzeigen weder in gedruckter Form in Printmedien noch in elektronischer Form in einem Computernetzwerk, insbesondere im Internet, vor. Vielmehr liegen die Anzeigen als Sprachnachrichten auf dem Diensterechner eines Telekommunikations (TK)-Netzwerks vor.

Zunächst wird eine vorgegebene Rufnummer eines Diensterechners in dem TK-Netzwerk über ein Endgerät eines Telefon-Netzwerks angewählt und über das Telefon-Netzwerk eine Verbindung zu dem Diensterechner aufgebaut. Der Diensterechner ist bspw. als ein Sprachserver ausgebildet und fungiert gewissermaßen als Anzeigen-Zentrale zur Annahme und zur Ausgabe der Anzeigen. Der Diensterechner erlaubt die Auswahl, ob eine neue Anzeige aufgegeben werden soll oder ob aufgegebene Anzeigen abgefragt werden sollen. Diese Auswahl erfolgt entweder über Spracheingabe oder über die Tastatur eines Endgeräts des Telefon-Netzwerks.

Dann wird eine gewünschte Rubrik der Anzeige ausgewählt. Dadurch kann entweder die Rubrik, unter der eine neue Anzeige abgelegt werden soll, oder die Rubrik ausgewählt werden, von der eine interessierte Person die abgelegten Anzeigen abfragen möchte. Auch diese Auswahl erfolgt entweder über Spracheingabe oder über die Tastatur eines Endgeräts des Telefon-Netzwerks. Es ist denkbar, jede Anzeige mit einer Kennung, aus der die ausgewählte Rubrik hervorgeht, in dem Anzeigenspeicher zu speichern. Es wäre aber auch denkbar, die Anzeigen in Abhängigkeit von der ausgewählten Rubrik auf bestimmten Bereichen der Anzeigeneinheit zu speichern.

Anschließend wird zur Aufgabe einer Anzeige der Anzeigentext eingegeben. Der Anzeigentext wird in einem Anzeigenspeicher des Diensterechners unter der ausgewählten Rubrik gespeichert. Der Diensterechner steuert den Anzeigenspeicher. Neben dem Anzeigentext können auch noch andere Angaben eingegeben und in dem Anzeigenspeicher gespeichert werden. Ist der Speicherplatz des Anzeigenspeichers erschöpft, wird automatisch die älteste Anzeige gelöscht.

Zur Abfrage einer Anzeige wird der Anzeigentext aus dem Anzeigenspeicher ausgegeben. Es werden nur diejenigen Anzeigen ausgegeben, die unter der ausgewählten Rubrik in dem Anzeigenspeicher abgespeichert sind. Die Anzeigen einer Rubrik können nach verschiedenen Kriterien sortiert ausgegeben werden. Die verschiedenen Anzeigenkriterien können über ein Endgerät des Telefon-Netzwerks an dem Diensterechner ausgewählt werden. Das Abfragen der Anzeige erfolgt bei einem als Sprachserver ausgebildeten Diensterechner über Sprachausgabe. Die Ausgabe der Anzeigen kann über die Telefonrechnung mit einer Gebühr belastet werden.

Das erfindungsgemäße Verfahren hat eine wesentlich geringere Reaktionszeit als das bekannte Verfahren zur Aufgabe und Abfrage von Anzeigen über die Printmedien. Außerdem kann mit Anzeigen, die mit dem erfindungsgemäßen Verfahren aufgegeben und/oder abgerufen werden, ein wesentlich größerer interessierter Personkreis erreicht werden, als dies mit Anzeigen möglich ist, die über das Internet aufgegeben und abgefragt werden, da heutzutage in nahezu jedem Haushalt ein Telefongerät zur Verfügung steht. Das erfindungsgemäße Verfahren verbindet somit die Vorteile der bekannten Verfahren ohne jedoch deren Nachteile aufzuweisen.

Vorteilhafterweise wird der Anzeigentext mittels Spracheingabe in einen als Sprachbox ausgebildeten Anzeigenspeicher eingegeben. Ebenso schlägt die Erfindung vor, daß der Anzeigentext mittels Sprachausgabe aus einem als Sprachbox ausgebildeten Anzeigenspeicher ausgegeben wird.

Die Auswahl der Rubrik erfolgt gemäß einer bevorzugten Ausführungsform durch Auswahl einer der Rubrik zugeordneten Klassifikationsnummer. Die Auswahl der Rubrik erfolgt entweder über Spracheingabe oder über die Tastatur eines Endgeräts des Telefon-Netzwerks.

Gemäß einer bevorzugten Weiterbildung der vorliegenden Erfindung wird vorgeschlagen, daß Informationen zur Identifikation der Person, durch die die Anzeige aufgegeben wird, über die Verbindung zu dem Diensterechner übermittelt werden und daß der Anzeigentext durch den Diensterechner um diese Informationen ergänzt wird. Es ist denkbar, daß die Ergänzung des Anzeigentextes mit den personenbezogenen Informationen an die Zustimmung der Person gebunden ist, die die Anzeige aufgegeben hat. Bei modernen Telefon-Netzwerken ist es bspw. möglich, daß das Endgerät bestimmte personenbezogene Informationen automatisch an den Diensterechner des TK-Netzwerks übermittelt.

Vorteilhafterweise wird die Rufnummer der Person über die Verbindung zu dem Diensterechner übermittelt, und durch den Diensterechner werden anhand der Rufnummer weitere personenbezogene Informationen aus einer Datenbank aufgerufen, auf die der Diensterechner Zugriff hat. Diese Datenbank ist bspw. Teil des Telefon-Netzwerks und enthält die Daten der Telefon-Teilnehmer, wie Rufnummer, Name, Anschrift und Abrechnungsdaten.

Vorteilhafterweise wird der Anzeigentext von dem Diensterechner durch Datum und/oder Uhrzeit der Aufgabe der Anzeige ergänzt. Die Angabe des Datums und der Uhrzeit dient zum einen zur Information von interessierten Personen, die die Anzeigen abfragen, wann diese aufgegeben wurden. Zum anderen kann mittels des Datums und der Uhrzeit der Inhalt des Anzeigenspeichers verwaltet und von Zeit zu Zeit aufgeräumt werden. Das Aufräumen des Anzeigenspeichers umfaßt bspw. auch das Löschen älterer Anzeigen.

Vorzugsweise werden die Anzeigen sortiert nach dem Datum und/oder der Uhrzeit der Aufgabe der Anzeige ausgegeben. Dadurch wird sichergestellt, daß die interessierten Personen die neuesten Anzeigen zuerst hören, von denen auszugehen ist, daß sie aktueller sind als die älteren Anzeigen.

Gemäß einer vorteilhaften Weiterbildung der Erfindung wird vorgeschlagen, daß ein gewünschter räumlicher geographischer Bereich der Anzeige ausgewählt wird. Die Auswahl des räumlichen geographischen Bereichs dient als Beschränkung der Anzeigen. Den interessierten Personen werden im Rahmen der Abfrage der Anzeigen nur diejenigen Anzeigen ausgegeben, die dem ausgewählten geographischen Bereich zugewiesen sind. Der geographische Bereich kann örtlich oder aber durch die Angabe eines Umgebungsbereichs (z. B. 10 km um den Wohnort der Person, die die Anzeige aufgegeben hat) definiert sein. Die Auswahl des geographischen Bereichs kann auch über ein multiple-choice-Abfrage erfolgen (z. B. Auswahl 1: LOKAL; Auswahl 2: REGIONAL; Auswahl 3: ÜBERREGIONAL). Zur Auswahl muß dann nur die gewünschte Auswahl-Nummer eingegeben werden.

Vorteilhafterweise wird der räumliche geographische Bereich abhängig von der Vorwahl der Rufnummer der Person, die die Anzeige aufgegeben hat, ausgewählt. Auf diese Weise kann die Auswahl des geographischen Bereichs bei Telefon-Netzwerken, in denen die Rufnummer des Anrufers dem Angerufenen automatisch übermittelt wird, automatisch erfolgen. LOKAL entspricht dann bspw. der Vorwahl 0711, REGIONAL der Vorwahl 07xx und ÜBERREGIONAL dem restlichen Bundesgebiet.

Vorzugsweise wird die Anzeige abhängig von dem räumlichen geographischen Bereich in dem Anzeigenspeicher abgelegt. Es ist denkbar, jede Anzeige mit einer Kennung, aus der der ausgewählte räumliche geographische Bereich hervorgeht, in dem Anzeigenspeicher zu speichern. Es wäre aber auch denkbar, die Anzeigen in Abhängigkeit von dem ausgewählten räumlichen geographischen Bereich in bestimmten Bereichen der Anzeigeneinheit zu speichern.

Eine weitere Aufgabe der vorliegenden Erfindung besteht darin, ein System der eingangs genannten Art zu schaffen, mit dem Anzeigen ohne große Verzögerung aufgegeben und abgerufen werden können und mit dem ein möglichst großer interessierter Personenkreis erreicht werden kann.

Zur Lösung dieser Aufgabe schlägt die Erfindung ausgehend von dem System der eingangs genannten Art ein System vor, das gekennzeichnet ist durch
- ein Endgerät eines Telefon-Netzwerks zur Anwahl einer vorgegebenen Rufnummer eines Diensterechners in einem Telekommunikations (TK)-Netzwerk und zum Aufbau einer Verbindung zu dem Diensterechner;
- Mittel zur Auswahl einer gewünschten Rubrik;
- einen Anzeigenspeicher zur Speicherung eines Anzeigentexts in Abhängigkeit von der ausgewählten Rubrik; und
- Mittel zur Eingabe des Anzeigentexts in den Anzeigenspeicher oder Mittel zur Ausgabe des Anzeigentexts aus dem Anzeigenspeicher.

Der Anzeigenspeicher ist vorzugsweise als eine Sprachbox ausgebildet. Das TK-Netzwerk ist vorteilhafterweise als ein Intelligentes Netzwerk (IN) ausgebildet, wobei der Diensterechner bestimmte Funktionen des IN steuert. Ein IN ist im Bereich der Telekommunikationstechnik seit längerer Zeit bekannt. Der Aufbau und die Funktion eines solchen IN wird bspw. in der WO 98/00955 offenbart.

Gemäß einer bevorzugten Ausführungsform der vorliegenden Erfindung wird vorgeschlagen, daß die Anzeigen abhängig von ihrem räumlichen geographischen Bereich in dem Anzeigenspeicher gespeichert sind. Der räumliche geographische Bereich einer Anzeige gibt an, in welchem Bereich die Anzeige Gültigkeit haben soll. Die Auswahl des räumlichen geographischen Bereichs dient als Beschränkung der Anzeigen. Den interessierten Personen werden im Rahmen der Abfrage der Anzeigen nur diejenigen Anzeigen ausgegeben, die dem ausgewählten geographischen Bereich zugewiesen sind.

Gemäß einer vorteilhaften Weiterbildung der Erfindung wird vorgeschlagen, daß das System Mittel zur Auswahl eines gewünschten räumlichen geographischen Bereichs der Anzeige aufweist. Die Mittel wählen den räumlichen geographischen Bereich vorzugsweise abhängig von der Vorwahl der Rufnummer der Person, die die Anzeige aufgegeben hat, aus.

Gemäß einer bevorzugten Ausführungsform der Erfindung wird vorgeschlagen, daß das System Mittel zum Ergänzen des Anzeigentexts durch Datum und/oder Uhrzeit der Aufgabe der Anzeige aufweist.

Gemäß einer besonders bevorzugten Weiterbildung der vorliegenden Erfindung wird vorgeschlagen, daß das System Mittel zur Wahl der Rufnummer der Person, die die Anzeige aufgegeben hat, und zum Aufbau einer Verbindung zu dieser Person aufweist. Wenn einer interessierten Person eine Anzeige ausgegeben wurde, an der sie ein besonderes Interesse hat, kann die interessierte Person durch die Mittel zur Wahl der Rufnummer die Person unmittelbar kontaktieren, die die Anzeige aufgegeben hat.

Ein bevorzugtes Ausführungsbeispiel der vorliegenden Erfindung wird im Folgenden anhand einer Zeichnung näher erläutert. Es zeigt:

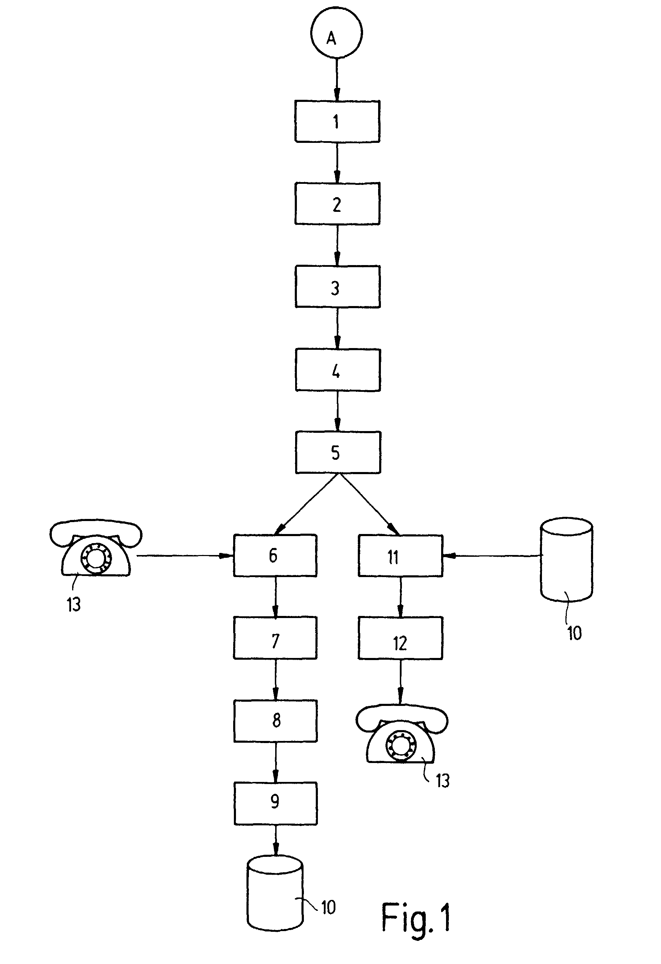

- Fig. 1: ein Ablaufdiagramm eines erfindungsgemäßen Verfahrens gemäß einer bevorzugten Ausführungsform.

In Fig. 1 ist ein Ablaufdiagramm eines erfindungsgemäßen Verfahrens gemäß einer bevorzugten Ausführungsform dargestellt.

Das Verfahren beginnt damit, daß eine Person A, die eine Anzeige aufgeben oder abfragen möchte, über ein Endgerät eines Telefon-Netzwerks eine vorgegebene Rufnummer eines Diensterechners in einem Telekommunikations (TK)-Netzwerk anwählt (Schritt 1) und eine Verbindung zu dem Diensterechner herstellt (Schritt 2). Das TK-Netzwerk ist bspw. als ein Intelligentes Netzwerk (IN) ausgebildet, wobei der Diensterechner bestimmte Funktionen des IN steuert. Der Diensterechner ist bspw. als ein Sprachserver ausgebildet und fungiert gewissermaßen als Anzeigen-Zentrale zur Annahme und zur Ausgabe der Anzeigen. Der Diensterechner erlaubt die Auswahl, ob eine neue Anzeige aufgegeben werden soll oder ob aufgegebene Anzeigen abgefragt werden sollen (Schritt 3). Diese Auswahl erfolgt entweder über Spracheingabe oder über die Tastatur eines Endgeräts des Telefon-Netzwerks.

Dann wird in Schritt 4 eine gewünschte Rubrik der Anzeige ausgewählt. Dadurch kann die Person A entweder die Rubrik auswählen, unter der sie eine neue Anzeige aufgeben möchte, oder die Rubrik auswählen, von der sie die aufgegebenen Anzeigen abfragen möchte. Auch diese Auswahl erfolgt entweder über Spracheingabe oder über die Tastatur eines Endgeräts des Telefon-Netzwerks.

Schließlich wählt die Person A in Schritt 5 den gewünschten räumlichen geographischen Bereich der Anzeige aus. Die Auswahl des räumlichen geographischen Bereichs dient als Beschränkung der Anzeigen. Einer Person A, die aufgegebene Anzeigen abfragen möchte, werden im Rahmen der Abfrage nur diejenigen Anzeigen ausgegeben, die dem ausgewählten geographischen Bereich zugewiesen sind. Der geographische Bereich kann anhand von Ortsgrenzen oder aber durch die Angabe eines Umgebungsbereichs (z. B. 10 km um den Wohnort der Person, die die Anzeige aufgegeben hat) definiert sein. Die Auswahl des geographischen Bereichs kann bspw. über ein multiple-choice-Abfrage erfolgen (z. B. Auswahl 1: LOKAL; Auswahl 2: REGIONAL; Auswahl 3: ÜBERREGIONAL). Zur Auswahl muß dann nur die gewünschte Auswahl-Nummer in das Endgerät des Telefon-Netzwerks eingegeben werden.

Anstatt, wie in Schritt 5, den gewünschten räumlichen geographischen Bereich durch die Person A auswählen zu lassen, kann dieser von dem Diensterechner auch automatisch ermittelt werden. Dazu kann das Verfahren die Möglichkeit ausnutzen, daß bestimmte personenbezogene Informationen entweder automatisch über die Verbindung zwischen dem Endgerät der Person A und dem Diensterechner übermittelt werden oder aus einer Datenbank, auf die der Diensterechner Zugriff hat, geladen werden. Solche personenbezogenen Informationen sind bspw. die Rufnummer der Person A. Anhand der Vorwahl der Rufnummer kann dann automatisch der gewünschte räumliche geographische Bereich ermittelt werden (z. B. 0711: LOKAL; 07xx: REGIONAL; sonst: ÜBERREGIONAL).

Anschließend verzweigt das Verfahren je nach dem, ob in Schritt 3 die Aufgabe oder die Abfrage einer Anzeige ausgewählt wurde. In Schritt 6 wird zur Aufgabe einer Anzeige der Anzeigentext eingegeben. Die Eingabe der Anzeige erfolgt mittels Spracheingabe über das Endgerät 13 des Telefon-Netzwerks.

Neben dem Anzeigentext können auch noch andere Angaben eingegeben gespeichert werden. So werden in Schritt 7 personenbezogene Informationen (z. B. Namen, Anschrift, Rufnummer, Bankverbindung) und in Schritt 8 das Datum und/oder die Uhrzeit der Aufgabe der Anzeige zu dem Anzeigentext hinzugefügt.

Der Anzeigentext wird in Schritt 9 zusammen mit den personenbezogenen Informationen aus den Schritten 7 und 8 in einem als Sprachbox ausgebildeten Anzeigenspeicher 10 des Diensterechners gespeichert.

Zur Abfrage einer aufgegebenen Anzeige wird der Anzeigentext in Schritt 11 aus dem Anzeigenspeicher 10 abgerufen. Der abgerufene Anzeigentext wird dann in Schritt 12 ausgegeben. Es werden nur diejenigen Anzeigen ausgegeben, die der ausgewählten Rubrik und dem ausgewählten räumlichen geographischen Bereich entsprechen. Die Anzeigen können nach verschiedenen Kriterien, z. B. nach Aufgabedatum, sortiert ausgegeben werden. Die Sortierkriterien können über das Endgerät des Telefon-Netzwerks an dem Diensterechner ausgewählt werden. Die Ausgabe der Anzeigen erfolgt bei einem als Sprachserver ausgebildeten Diensterechner mittels Sprachausgabe an das Endgerät 13 der Person A. Die Ausgabe der Anzeigen kann der Person A über die Telefonrechnung mit einer Gebühr belastet werden.

## Patentansprüche

1. Verfahren zum Aufgeben und Abfragen einer Anzeige,
**gekennzeichnet durch** die nachfolgenden Schritte:
- Anwahl einer vorgegebenen Rufnummer eines Diensterechners in einem Telekommuniations (TK)-Netzwerk (1) und Aufbau einer Verbindung zu dem Diensterechner (2);
- Auswahl einer gewünschten Rubrik der Anzeige (4); und
- Eingabe eines Anzeigentexts (6) in einen oder Ausgabe eines Anzeigentexts (12) aus einem der ausgewählten Rubrik zugeordneten Anzeigenspeicher (10) .

2. Verfahren nach Anspruch 1, dadurch gekennzeichnet, daß der Anzeigentext mittels Spracheingabe in einen als Sprachbox ausgebildeten Anzeigenspeicher (10) eingegeben wird.

3. Verfahren nach Anspruch 1 oder 2, dadurch gekennzeichnet, daß der Anzeigentext mittels Sprachausgabe aus einem als Sprachbox ausgebildeten Anzeigenspeicher (10) ausgegeben wird.

4. Verfahren nach einem der Ansprüche 1 bis 3, dadurch gekennzeichnet, daß die Rubrik durch Auswahl einer der Rubrik zugeordneten Klassifikationsnummer ausgewählt wird.

5. Verfahren nach einem der Ansprüche 1 bis 4, dadurch gekennzeichnet, daß Informationen zur Identifikation der Person (A), durch die die Anzeige aufgegeben wird, über die Verbindung zu dem Diensterechner übermittelt werden und daß der Anzeigentext durch den Diensterechner um diese Informationen ergänzt wird.

6. Verfahren nach Anspruch 5, dadurch gekennzeichnet, daß die Rufnummer der Person (A) über die Verbindung zu dem Diensterechner übermittelt wird und daß durch den Diensterechner anhand der Rufnummer weitere personenbezogene Informationen aus einer Datenbank, auf die der Diensterechner Zugriff hat, aufgerufen werden.

7. Verfahren nach einem der Ansprüche 1 bis 6, dadurch gekennzeichnet, daß der Anzeigentext von dem Diensterechner durch Datum und/oder Uhrzeit der Aufgabe der Anzeige ergänzt wird.

8. Verfahren nach Anspruch 7, dadurch gekennzeichnet, daß die Anzeigen sortiert nach dem Datum und/oder der Uhrzeit der Aufgabe der Anzeige ausgegeben werden.

9. Verfahren nach einem der Ansprüche 1 bis 8, dadurch gekennzeichnet, daß ein gewünschter räumlicher geographischer Bereich der Anzeige ausgewählt wird.

10. Verfahren nach Anspruch 9, dadurch gekennzeichnet, daß die Anzeige abhängig von dem räumlichen geographischen Bereich in dem Anzeigenspeicher abgelegt wird.

11. Verfahren nach Anspruch 9 oder 10, dadurch gekennzeichnet, daß der räumliche geographische Bereich abhängig von der Vorwahl der Rufnummer der Person (A), die die Anzeige aufgegeben hat, ausgewählt wird.

12. System zum Aufgeben und Abfragen von Anzeigen,
**gekennzeichnet durch**
- ein Endgerät (13) eines Telefon-Netzwerks zur Anwahl einer vorgegebenen Rufnummer eines Diensterechners in einem Telekommunikations (TK)-Netzwerk und zum Aufbau einer Verbindung zu dem Diensterechner;
- Mittel zur Auswahl einer gewünschten Rubrik;
- einen Anzeigenspeicher (10) zur Speicherung eines Anzeigentexts in Abhängigkeit von der ausgewählten Rubrik; und
- Mittel zur Eingabe des Anzeigentexts in den Anzeigenspeicher oder Mittel zur Ausgabe des Anzeigentexts aus dem Anzeigenspeicher.

13. System nach Anspruch 12, dadurch gekennzeichnet, daß der Anzeigenspeicher (10) als eine Sprachbox ausgebildet ist.

14. System nach Anspruch 12 oder 13, dadurch gekennzeichnet, daß das TK-Netzwerk als ein Intelligentes Netzwerk (IN) ausgebildet ist, wobei bestimmte Funktionen des IN von dem Diensterechner gesteuert werden.

15. System nach einem der Ansprüche 12 bis 14, dadurch gekennzeichnet, daß das System Mittel zur Auswahl eines gewünschten räumlichen geographischen Bereichs der Anzeige aufweist.

16. System nach Anspruch 15, dadurch gekennzeichnet, daß die Mittel den räumlichen geographischen Bereich abhängig von der Vorwahl der Rufnummer der Person, die die Anzeige aufgegeben hat, auswählen.

17. System nach Anspruch 15 oder 16, dadurch gekennzeichnet, daß die Anzeigen abhängig von ihrem räumlichen geographischen Bereich in dem Anzeigenspeicher gespeichert sind.

18. System nach einem der Ansprüche 12 bis 17, dadurch gekennzeichnet, daß das System Mittel zum Ergänzen des Anzeigentexts durch Datum und/oder Uhrzeit der Aufgabe der Anzeige aufweist.

19. System nach einem der Ansprüche 12 bis 18, dadurch gekennzeichnet, daß das System Mittel zur Wahl der Rufnummer der Person (A), die die Anzeige aufgegeben hat, und zum Aufbau einer Verbindung zu dieser Person (A) aufweist.
